Europäisches Patentamt

European Patent Office

Office européen des brevets

(19)

(11) **EP 0 922 675 A1**

(12) **EUROPÄISCHE PATENTANMELDUNG**

(43) Veröffentlichungstag:
16.06.1999 Patentblatt 1999/24

(51) Int. Cl.$^6$: **C01C 3/02**

(21) Anmeldenummer: 98122730.9

(22) Anmeldetag: 28.11.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.12.1997 DE 19754988**

(71) Anmelder:
**DEGUSSA AKTIENGESELLSCHAFT**
**60311 Frankfurt (DE)**

(72) Erfinder:
• **von Hippel, Lukas, Dr.**
  **63755 Alzenau (DE)**
• **Arntz, Dietrich, Dr.**
  **Mobile AL 36695 (US)**
• **Sauer, Manfred, Dr.**
  **63517 Rodenbach (DE)**
• **Vanheertum, Rudolf, Dr.**
  **63796 Kahl (DE)**

(54) **Herstellung von Blausäure nach dem Andrussow-Verfahren**

(57)     Die Erfindung betrifft die Herstellung von Blausäure nach dem Andrussow-Verfahren durch Umsetzen der Eduktgase Methan, Ammoniak und Sauerstoff an einem Katalysator zu Blausäure und Wasser bei erhöhter Temperatur. Erfindungsgemäß wird die bei der Umsetzung frei werdende Reaktionswärme im indirekten Wärmetausch nach dem Gegenstromprinzip zur Erwärmung der Eduktgase auf die erforderliche Reaktionstemperatur verwendet wird. Die für das erfindungsgemäße Verfahren benötigten Reaktoren sind kompakt und preiswert herzustellen.

## Beschreibung

Die Erfindung betrifft die Herstellung von Blausäure nach dem Andrussow-Verfahren durch Umsetzen der Eduktgase Methan, Ammoniak und Sauerstoff an einem Katalysator zu Blausäure und Wasser bei erhöhter Temperatur.

Gemäß dem Andrussow-Verfahren werden Methan, Ammoniak und Sauerstoff nach der folgenden Reaktionsgleichung zu Blausäure und Wasser umgesetzt:

$$CH_4 + NH_3 + 1{,}5O_2 \rightarrow HCN + 3H_2O$$

Die Umsetzung ist exotherm. Pro erzeugtem Mol Blausäure wird eine Energie von 474 kJ freigesetzt.

Das Andrussow-Verfahren wird in Ullmann's Encyclopedia of Industrial Chemistry, Volume 8, Weinheim 1987, Seiten 161-162 beschrieben. Die Umsetzung erfolgt bei Atmosphärendruck an einem Platinkatalysator bei einer Temperatur von über 1000°C. Als Katalysator ist zum Beispiel der in der US-Patentschrift US 3,360,335 beschriebene Platinkatalysator geeignet. Die gebildete Blausäure muß möglichst umgehend auf Temperaturen unter 800°C abgekühlt werden, um eine thermische Zersetzung zu vermeiden. Beim herkömmlichen Andrussow-Verfahren geschieht dies in einem Wärmetauscher unter Erzeugung von Dampf, welcher im weiteren Prozeß verwendet wird. Ein kritischer Punkt beim Andrussow-Verfahren ist die Tatsache, daß das Eduktgasgemisch bevor es mit dem Katalysator in Kontakt tritt auf eine Temperatur erwärmt werden muß, bei der das Gasgemisch sich im Explosionsbereich befindet.

Aufgabe der vorliegenden Erfindung ist die Angabe eines Verfahrens zur Herstellung von Blausäure durch Umsetzen der Eduktgase Methan, Ammoniak und Sauerstoff an einem Katalysator, welches eine bessere technische Beherrschung der exothermen Umsetzung ermöglicht und in einfachen und kompakten, modularen Reaktoren durchführbar ist, die sich leicht zu einer größeren Anlage zusammenschalten lassen.

Diese Aufgabe wird durch ein gattungsgemäßes Verfahren gelöst, das dadurch gekennzeichnet ist, daß die bei der Umsetzung frei werdende Reaktionswärme im indirekten Wärmetausch nach dem Gegenstromprinzip zur Erwärmung der Eduktgase auf die erforderliche Reaktionstemperatur verwendet wird.

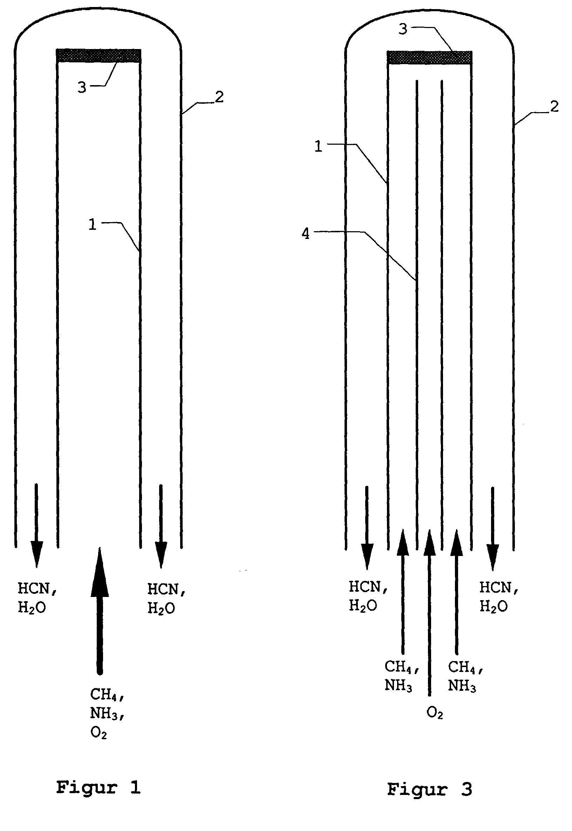

Das erfindungsgemäße Verfahren wird an Hand der Figuren 1 bis 3 näher erläutert. Sie zeigen für das Verfahren geeignete Reaktoren. Es handelt sich um spezielle Ausführungsformen von Gegenstromreaktoren. Das erfindungsgemäße Verfahren ist jedoch nicht an die gezeigten Reaktoren gebunden. Vielmehr sind andere Gegenstromreaktoren denkbar, die ebenfalls mit Erfolg eingesetzt werden können.

Figur 1 zeigt einen Umkehr-Gegenstromreaktor. Er besteht aus zwei koaxialen Rohren aus zum Beispiel gasdicht gesinterter Aluminiumoxidkeramik. Das Innenrohr 1 ist am oberen Ende mit einem Katalysatorbett 3 versehen. Das Außenrohr 2 ist am oberen Ende, dem Reaktorkopf, verschlossen. Wird zum Beispiel eine Eduktgasmischung von unten in das Innenrohr eingeführt, so passiert es den Katalaysator am oberen Ende und wird dann in den ringförmigen Zwischenraum zwischen Innen- und Außenrohr nach unten umgelenkt.

Zum Starten der Umsetzung müssen Eduktgasmischung und Katalysator auf eine Temperatur von wenigstens 800°C erwärmt werden. Dies kann durch einen um das Außenrohr herumgelegten Heizmantel oder durch eine direkte Beheizung des Katalysators, z.B. durch Strom, geschehen. Nach Zünden der Umsetzung reicht die frei werdende Reaktionswärme aus, um das Eduktgasgemisch auf die Reaktionstemperatur zu erwärmen. Eventuell überschüssige Reaktionswärme kann dadurch neutralisiert werden, daß statt reinem Sauerstoff Luft als Sauerstoff lieferndes Gas verwendet wird. In diesem Fall dient der Luftstickstoff als Ballastgas zur Abfuhr von Reaktionswärme. Gegebenenfalls kann das Volumenverhältnis von Sauerstoff zu Stickstoff den Erfordernissen des Prozesses angepaßt und/oder eine Abfuhr überschüssiger Reaktionswärme aus dem Eduktgasgemisch durch Kühlen des Reaktorkopfes vorgesehen werden.

Durch den Wärmeaustausch zwischen Produktgasgemisch und den Eduktgasen im Gegenstrom weist der Reaktor am Gaseinlaß und am Gasauslaß sehr niedrige Temperaturen von unter 200°C auf.

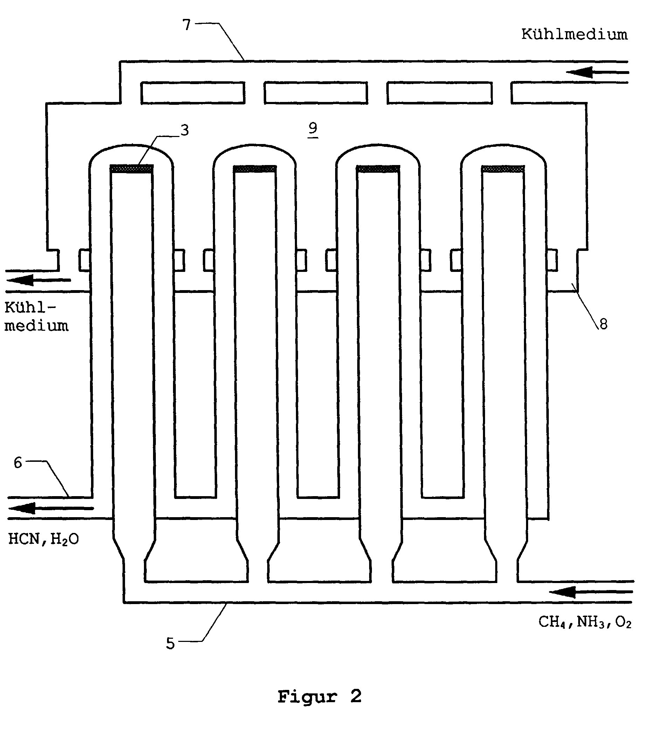

Figur 2 zeigt beispielhaft die Zusammenschaltung mehrerer Reaktoren gemäß Figur 1 zu einer größeren Produktionseinheit aus 4 Reaktoren. Die Innenrohre werden über die Sammelleitung 5 mit dem Eduktgasgemisch aus Methan, Ammoniak, Sauerstoff und gegebenenfalls Stickstoff versorgt. Die Produktgase aus dem Ringraum zwischen Außenrohren und Innenrohren werden über die Sammelleitung 6 abgeführt. Der obere Teil der Reaktoren befindet sich zur Abführung der Reaktionswärme in einem Wärmetauscher 9, der mit einem Kühlmedium, z.B. einem Wärmetauscheröl, über die Sammelleitung 7 versorgt wird. Über Sammelleitung 8 wird das erwärmte Kühlmedium abgeführt. Durch die Konstruktion des Wärmetauschers muß gewährleistet werden, das jeder Reaktor in gleicher Weise gekühlt wird. Dies kann gegebenenfalls durch zusätzlich in den Wärmetauscher eingebaute Strömungsleitbleche gewährleistet werden.

Figur 3 zeigt eine weitere mögliche Ausführungsform eines für das erfindungsgemäße Verfahren zu verwendenden Reaktors. In das Innenrohr 1 ist ein weiteres Rohr 4 bis kurz unter das Katalysatorbett geführt. Durch dieses zusätzliche Rohr wird Sauerstoff, beziehungsweise Luft, von Methan und Ammoniak getrennt dem Katalysator zugeführt. Das vermindert die Explosionsgefahr und erhöht damit die Betriebssicherheit des Verfahrens erheblich. Erst kurz vor dem Kontakt mit dem Katalysator wird der sauerstoffhaltige Gasstrom dem Strom aus Methan und Ammoniak zugemischt.

### Beispiel 1:

Der Reaktor nach Figur 1 wurde zur Herstellung von Blausäure nach dem Andrussow-Verfahren eingesetzt. Das Außenrohr des Reaktors hatte einen Durchmesser von 50 und das Innenrohr von 35 mm. Die Länge des Reaktors betrug 700 mm. Als Katalysator wurde eine 5 mm dicke Katalysatorpackung aus einem feinen Drahtgeflecht einer Platin/Rhodium-Legierung entsprechend der US-Patentschrift US 3,360,335 verwendet.

Die Reaktorrohre bestanden aus gasdichter Aluminiumoxidkeramik. Der Reaktor wurde durch eine elektrische Beheizung auf 800°C vorgewärmt. In das Innenrohr 1 wurde von unten ein Eduktgasgemisch aus Methan, Ammoniak und Sauerstoff (aus Luft) mit einem Volumenverhältnis von 1,5:1:1 eingeführt. Der Massenstrom von Ammoniak betrug 800 mmol/h.

Die Umsetzung zündete ohne Probleme. Zur Analyse des Produktgasgemisches wurde es durch einen Wäscher mit 25%iger Natronlauge geleitet und der Cyanidgehalt durch argentometrische Titration bestimmt.

Es wurde eine Ausbeute an Blausäure von 58%, bezogen auf Ammoniak, ermittelt.

### Beispiel 2:

Beispiel 1 wurde wiederholt, jedoch wurde das Eduktgasgemisch in den Ringraum zwischen Innen- und Außenrohr eingespeist. Die Zündung der Reaktion erfolgte explosionsartig. Der Reaktor wurde zerstört.

### Beispiel 3:

Für die weiteren Beispiele wurde der Reaktor nach Figur 2 verwendet, der die getrennte Zuführung und Aufheizung von Luftsauerstoff einerseits und Methan und Ammoniak andererseits ermöglicht. Der Luftsauerstoff wurde dabei wie in Figur 2 gezeigt, dem innersten Rohr zugeführt.

Die Volumenverhältnisse der verschiedenen Gase wurden wie in Beispiel 1 gewählt. Es wurde eine Blausäure-Ausbeute von 64%, bezogen auf Ammoniak, bestimmt.

### Beispiel 4:

Beispiel 3 wurde wiederholt, jedoch wurde die in das innerste Rohr des Reaktors eingeführte Luft mit zusätzlichem Stickstoff als Ballastgas angereichert. Die Volumenverhältnisse der einzelnen Gaskomponenten waren:

Methan : Ammoniak : Sauerstoff (aus Luft) : Stickstoff (aus Luft und zusätzlichem Stickstoff) = 1,5 : 1 : 1 : 8

Es wurde eine Ausbeute an Blausäure von 62%, bezogen auf Ammoniak, ermittelt.

### Beispiel 5:

Beispiel 3 wurde wiederholt. Zur Abführung überschüssiger Wärme wurde auf dem Kopf des Reaktors ein Wärmetauscher angebracht.

Die gemessen Blausäure-Ausbeute betrug 65%.

## Patentansprüche

1. Herstellung von Blausäure nach dem Andrussow-Verfahren durch Umsetzen der Eduktgase Methan, Ammoniak und Sauerstoff an einem Katalysator zu Blausäure und Wasser bei erhöhter Temperatur,
dadurch gekennzeichnet,
daß die bei der Reaktion frei werdende Reaktionswärme im indirekten Wärmetausch nach dem Gegenstromprinzip zur Erwärmung der Eduktgase auf die erforderliche Reaktionstemperatur verwendet wird.

2. Verfahren nach Anspruch 1,
dadurch gekennzeichnet,
daß die Eduktgase als Gasgemisch auf die erforderliche Reaktionstemperatur erwärmt werden.

3. Verfahren nach Anspruch 1,
dadurch gekennzeichnet,
daß Sauerstoff einerseits und Methan und Ammoniak andererseits getrennt auf die erforderliche Reaktionstemperatur erwärmt werden.

4. Verfahren nach Anspruch 2 oder 3,
dadurch gekennzeichnet,
daß der Sauerstoff in Form von Luftsauerstoff bereitgestellt wird.

5. Verfahren nach Anspruch 4
dadurch gekennzeichnet,
daß zusätzlicher Stickstoff als Ballastgas dem Eduktgasgemisch beigemischt wird und/oder überschüssige Reaktionswärme aus dem Eduktgasgemisch entfernt wird.

Figur 1

HCN,
H₂O

HCN,
H₂O

CH₄,
NH₃,
O₂

Figur 3

HCN,
H₂O

HCN,
H₂O

CH₄,
NH₃

CH₄,
NH₃

O₂

Figur 2

# EP 0 922 675 A1

**Europäisches Patentamt**

# EUROPÄISCHER RECHERCHENBERICHT

**Nummer der Anmeldung**

EP 98 12 2730

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO 97 09273 A (ICI PLC ;COWELL CHRISTOPHER (GB); DOY RALPH (GB)) 13. März 1997 * Seite 5, Zeile 13 - Zeile 23; Ansprüche; Abbildungen * | 1,3 | C01C3/02 |
| Y | --- | 2,4,5 | |
| Y | EP 0 345 925 A (MITSUBISHI GAS CHEMICAL CO) 13. Dezember 1989 * Seite 3, Zeile 25 - Zeile 34 * | 2,4,5 | |
| A | --- | 1,3 | |
| A | FR 2 554 014 A (DUPONTEIL GILBERT) 3. Mai 1985 * Seite 4, Zeile 6 - Zeile 25; Anspruch 1; Abbildungen * --- | 1,2,4,5 | |
| A | CHEMICAL ABSTRACTS, vol. 121, no. 14, 3. Oktober 1994 Columbus, Ohio, US; abstract no. 160254, GRIN, G. I. ET AL: "Effect of nitrogen additions on yield of hydrogen cyanide forming during oxidative ammonolysis of methane" XP000665201 * Zusammenfassung * & ZH. PRIKL. KHIM. (S.-PETERBURG) (1993), 66(9), 2025-30 CODEN: ZPKHAB;ISSN: 0044-4618, --- | 5 | |
| A | FR 2 457 124 A (LUMMUS CO) 19. Dezember 1980 --- | | **RECHERCHIERTE SACHGEBIETE (Int.Cl.6)** C01C |
| A | EP 0 752 390 A (DEGUSSA) 8. Januar 1997 ------ | | |

Der vorliegende Recherchenbericht wurde für alle Patentansprüche erstellt

| Recherchenort | Abschlußdatum der Recherche | Prüfer |
|---|---|---|
| DEN HAAG | 16. März 1999 | Zalm, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 98 12 2730

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-03-1999

| Im Recherchenbericht angeführtes Patentdokument | Datum der Veröffentlichung | Mitglied(er) der Patentfamilie | Datum der Veröffentlichung |
|---|---|---|---|
| WO 9709273 A | 13-03-1997 | AU 6879996 A<br>CN 1200102 A<br>EP 0847372 A | 27-03-1997<br>25-11-1998<br>17-06-1998 |
| EP 0345925 A | 13-12-1989 | JP 1261222 A<br>JP 2737914 B<br>DE 68921251 D<br>DE 68921251 T<br>US 4965060 A<br>US 5354543 A | 18-10-1989<br>08-04-1998<br>30-03-1995<br>29-06-1995<br>23-10-1990<br>11-10-1994 |
| FR 2554014 A | 03-05-1985 | KEINE | |
| FR 2457124 A | 19-12-1980 | US 4341737 A<br>AU 532977 B<br>AU 5861780 A<br>CA 1121987 A<br>DE 3019625 A<br>GB 2053017 A,B<br>IN 154372 A<br>JP 56002841 A<br>NL 8002943 A<br>US 4461751 A<br>US 4423022 A | 27-07-1982<br>20-10-1983<br>27-11-1980<br>20-04-1982<br>27-11-1980<br>04-02-1981<br>20-10-1984<br>13-01-1981<br>25-11-1980<br>24-07-1984<br>27-12-1983 |
| EP 0752390 A | 08-01-1997 | DE 19524158 A<br>AT 171922 T<br>BR 9602951 A<br>CZ 9601826 A<br>DE 59600643 D<br>ES 2124610 T<br>JP 9020516 A<br>SK 84296 A<br>US 5785942 A | 09-01-1997<br>15-10-1998<br>28-04-1998<br>12-02-1997<br>12-11-1998<br>01-02-1999<br>21-01-1997<br>09-07-1997<br>28-07-1998 |

EPO FORM P0461

Für nähere Einzelheiten zu diesem Anhang : siehe Amtsblatt des Europäischen Patentamts, Nr. 12/82